# EUROPEAN PATENT APPLICATION

(11) **EP 2 437 444 A1**
(43) Date of publication of application: **04.04.2012**
(21) Application number: 10818393.0
(22) Date of filing: 17.09.2010
(51) Int. Cl.: H04L 12/56

(54) **METHOD, ROUTER AND COMMUNICATION SYSTEM FOR RAPID MULTICAST CONVERGENCE**

(30) Priority: 25.09.2009 CN 200910177834
(71) Applicant: Huawei Technologies Co., Ltd., Shenzhen, Guangdong 518129 (CN)
(72) Inventor: LIU, Yisong, Shenzhen Guangdong 518129 (CN); ZHAO, Dahe, Shenzhen Guangdong 518129 (CN); YIN, Yuanbin, Shenzhen Guangdong 518129 (CN)
(74) Representative: Charles, Glyndwr
(86) International application number: PCT/CN2010/077022
(87) International publication number: WO 2011/035699

(57) **Abstract**

A fast convergence method, router, and communication system for multicast are disclosed. In the fast convergence method, router, and communication system for multicast, active and standby outgoing interfaces and active and standby next hops for each unicast route reaching a multicast source are calculated, and then active and standby paths are constructed according to the calculated active and standby outgoing interfaces and next hops; when the active path fails, a multicast stream sent by the multicast source is received through the standby path and forwarded; because a node in the solution may dynamically send Protocol Independent Multicast (PIM) Join messages to construct active and standby paths according to the active and standby outgoing interfaces and next hops (namely, according to the routing result) calculated by use of unicast route, active and standby incoming interfaces and next hops of multicast do not need to be configured on the device statically, which may adapt to dynamic topology changes of the network and greatly expand the multicast stream protection scenarios.

## Description

This application claims priority to Chinese Patent Application No. 200910177834.9, filed with the Chinese Patent Office on September 25, 2009 and entitled "FAST CONVERGENCE METHOD, ROUTER, AND COMMUNICATION SYSTEM FOR MULTICAST", which is incorporated herein by reference in its entirety.

### FIELD OF THE INVENTION

The present invention relates to the field of communication technologies, and in particular, to a fast convergence method, a router, and a communication system for multicast.

### BACKGROUND OF THE INVENTION

Internet Protocol (IP, Internet Protocol) multicast is a technology of transmitting a data packet in an IP network to a determined node subset in the network in a best-effort manner, where the subset is called a multicast group (multicast group). Some network services, for example, live webcast, Internet TV, distance education, and real-time video conference, may be implemented by using the IP multicast technology. However, these services impose high real-time requirements and packet loss affects these services seriously. Therefore, to ensure normal transmission of service data, when the network fails, paths need to be converged fast.

At present, multicast convergence is generally implemented by using the Protocol Independent Multicast (PIM, Protocol Independent Multicast) protocol. In the solution of the prior art, a standby link is generally specified for an active link beforehand, and at the same time, a PIM Join (Join) interface is configured for both links separately, that is, an upstream interface of the active link and an upstream interface of the standby link are configured respectively. Afterward, the upstream interface of the active link and the upstream interface of the standby link send a PIM Join respectively to their respective previous hop nodes to set up a multicast tree reaching the multicast source. Finally, an active path (active multicast tree) reaching the multicast source and a standby path (standby multicast tree) reaching the multicast source are formed respectively. The multicast source sends multicast streams through the active path and the standby path simultaneously. Normally, each node receives only the multicast stream on the active path, and discards the multicast stream on the standby path. When the active path fails, the forwarding entry is switched to the standby path so as to receive the multicast stream on the standby path and forward the multicast stream.

It should be noted that the convergence performance of PIM protocol is far worse than the convergence performance of unicast. The reason is that unicast convergence only needs to spread a failure message and then each network node completes route calculation locally; in this way, all routes may be converged to a new path. However, that's not the same for multicast. Definitely, unicast requires that each route should perform sending and forwarding, and therefore the performance bottleneck mainly lies in calculation and sending. The PIM protocol is equivalent to a tunneling protocol, and each multicast route is equivalent to a tunnel. Therefore, after route changes have been processed locally and sent to the forwarding plane, the route changes further need to be notified to the upstream node hop by hop, and the upstream node also needs to perform a process of calculation and send the route changes to the forwarding plane. Therefore, the transmission of PIM Join messages involves substantial overheads. In addition, because the overheads occur between network nodes, the overheads are far more than the overheads of sending route changes to the forwarding plane by the device itself.

In the process of researching and practicing the prior art, the inventors of the present invention find that: In the prior art, because the active and standby incoming interfaces, and the active and standby next hops of multicast need to be configured on the device statically, it is impossible to adapt to dynamic topology changes of the network, and the multicast stream protection scenario is restricted greatly.

### SUMMARY OF THE INVENTION

Embodiments of the present invention provide a multicast fast convergence method, a router, and a communication system to adapt to dynamic topology changes of the network.

A multicast fast convergence method includes:
calculating an active outgoing interface, a standby outgoing interface, an active next hop, and a standby next hop for each unicast route reaching a multicast source;
sending a PIM Join message to the active next hop to set up an active path by using the calculated active outgoing interface as an active incoming interface of multicast;
sending a PIM Join message to the standby next hop to set up a standby path by using the calculated standby outgoing interface as a standby incoming interface of multicast; and
when the active path fails, receiving a multicast stream sent by the multicast source through the standby path and forwarding the multicast stream.

A router includes:
a calculating unit, configured to calculate an active outgoing interface, a standby outgoing interface, an active next hop, and a standby next hop for each unicast route reaching a multicast source;
an active sending unit, configured to send a PIM Join message to the active next hop to set up an active path by using the calculated active outgoing interface as an active incoming interface of multicast;
a standby sending unit, configured to send a PIM Join message to the standby next hop to set up a standby path by using the calculated standby outgoing interface as a standby incoming interface of multicast; and
a first processing unit, configured to receive a multicast stream sent by the multicast source through the standby path, which the standby sending unit initiates to set up and forward the multicast stream, when the active path which the active sending unit initiates to set up fails.

A communication system includes any router provided in an embodiment of the present invention, for example, including:
a first router, configured to: calculate an active outgoing interface, a standby outgoing interface, an active next hop, and a standby next hop for each unicast route reaching a multicast source; send a PIM Join message to the active next hop to set up an active path by using the calculated active outgoing interface as an active incoming interface of multicast; send a PIM Join message to the standby next hop to set up a standby path by using the calculated standby outgoing interface as a standby incoming interface of multicast; and when the active path fails, receive a multicast stream sent by the multicast source through the standby path and forward the multicast stream;
a second router, serving as the active next hop, and configured to: receive the PIM Join message sent by the first router, send a PIM Join message to a fourth router to set up an active path, and after receiving a multicast stream sent by the fourth router, forward the multicast stream to the first router;
a third router, serving as the standby next hop, and configured to: receive the PIM Join message sent by the first router, send a PIM Join message to the fourth router to set up a standby path, and after receiving a multicast stream sent by the fourth router, forward the multicast stream to the first router; and
the fourth router, configured to: receive the PIM Join message sent by the second router and the PIM Join message sent by the third router, and after the active path and the standby path are set up, send a multicast stream to the second router through the active path, and send a multicast stream to the third router through the standby path.

In embodiments of the present invention, active and standby outgoing interfaces, and active and standby next hops for each unicast route reaching a multicast source are calculated, then active and standby paths are constructed according to the calculated active and standby outgoing interfaces, and the calculated active and standby next hops; when the active path fails, the multicast stream sent by the multicast source is received through the standby path and forwarded; because the node in the solution may dynamically send PIM Join messages to construct active and standby paths according to the calculated active and standby outgoing interfaces, and the calculated active and standby next hops (namely, according to the routing result), active and standby incoming interfaces, and active and standby next hops of multicast for sending the PIM Join messages do not need to be configured on the device statically, which may adapt to dynamic topology changes of the network and greatly expand the multicast stream protection scenarios.

### BRIEF DESCRIPTION OF THE DRAWINGS

FIG. 1 is a flowchart of a method according to embodiment 1 of the present invention;
FIG. 2 is a schematic diagram of a network topology according to embodiment 2 of the present invention;
FIG. 3 is a schematic diagram of a network topology scenario according to embodiment 2 of the present invention;
FIG. 4 is a schematic diagram of a network topology scenario according to embodiment 3 of the present invention;
FIG. 5 is a schematic structural diagram of a router according to an embodiment of the present invention; and
FIG. 6 is a schematic structural diagram of a communication system according to an embodiment of the present invention.

### DETAILED DESCRIPTION OF THE EMBODIMENTS

The technical solutions provided in the embodiments of the present invention are hereinafter described clearly with reference to the accompanying drawings. Apparently, the embodiments are only exemplary embodiments of the present invention and the present invention is not limited to such embodiments. Other embodiments that those skilled in the art derive from embodiments of the present invention also fall within the scope of the present invention.

Embodiments of the present invention provide a fast convergence method, router, and communication system for multicast, as described in detail separately below.

### Embodiment 1

This embodiment is described from the perspective of a destination node. In embodiments of the present invention, the destination node refers to a node directly connected to a receiver; a source node refers to a node directly connected to a multicast source. In addition, an outgoing interface of a unicast route is an incoming interface for a multicast application.

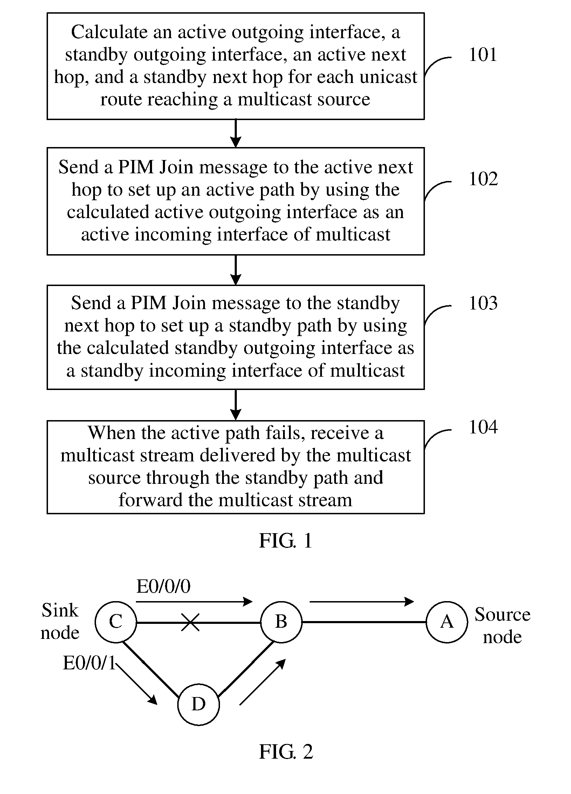

A fast convergence method for multicast includes: calculating an active outgoing interface, a standby outgoing interface, an active next hop and a standby next hop for each unicast route reaching a multicast source; sending a PIM Join message to the active next hop to set up an active path by using the calculated active outgoing interface as an active incoming interface of multicast; sending a PIM Join message to the standby next hop to set up a standby path by using the calculated standby outgoing interface as a standby incoming interface of multicast; and when the active path fails, receiving a multicast stream sent by the multicast source through the standby path and forwarding the multicast stream. The PIM Join message described in embodiments of the present invention refers to a Bidirectional PIM Join message, which is abbreviated to PIM Join message in the following description. As shown in FIG. 1, the specific process may be as follows:
101. Calculate an active outgoing interface, a standby outgoing interface, an active next hop, and a standby next hop for each unicast route reaching a multicast source.
   For example, the active outgoing interface, the standby outgoing interface, the active next hop and the standby next hops for each unicast route reaching the multicast source may be calculated by enabling unicast IP Fast Reroute (FRR, Fast Reroute). Generally, only one optimal unicast route reaches the specific multicast source. However, if unicast IP FRR is enabled, other standby unicast routes may exist, that is, a standby outgoing interface and a standby next hop may exist. Therefore, in this case, the active outgoing interface, standby outgoing interface, the active next hop and the standby next hop for each unicast route reaching the multicast source may be calculated.
   IP FRR refers to a relevant technology in which the next hop of a forwarding entry is directly changed on a router adjacent to a failed link or failed node, so traffic can bypass the failed node and an effect of no traffic outage is achieved when a failure occurs, and it requires that the forwarded traffic does not cause a loop. This practice does not require convergence on the control layer, and depends only on the time of sensing a failure and time of switching the next hop. Therefore, the purpose of FRR may be achieved. Currently, the technology is mainly applied in the unicast field. In this embodiment, the technology is combined with Bidirectional PIM Join (Join) and applied in multicast to adapt to dynamic topology changes of the network, which will be described in detail in the following embodiments.
102. Send a PIM Join message to the active next hop to set up an active path by using the calculated active outgoing interface as an active incoming interface of multicast.
   For example, the PIM Join message is sent to the active next hop through the calculated active outgoing interface to trigger Protocol Independent Multicast-Sparse Mode (PIM-SM, Protocol Independent Multicast-Sparse Mode) to construct an active Rendezvous Point Tree (RPT, Rendezvous Point Tree), where the active RPT includes the active path; or
   the PIM Join message is sent to the active next hop through the calculated active outgoing interface to trigger PIM-SM or Protocol Independent Multicast-Source-Specific Multicast (PIM-SSM, Protocol Independent Multicast-Source-Specific Multicast) to construct an active Shortest Path Tree (SPT, Shortest Path Tree), where the active SPT includes the active path.
103. Send a PIM Join message to the standby next hop to set up a standby path by using the calculated standby outgoing interface as a standby incoming interface of multicast.
   For example, the PIM Join message is sent to the standby next hop through the calculated standby outgoing interface to trigger PIM-SM to construct a standby RPT, where the standby RPT includes the standby path; or
   the PIM Join message is sent to the standby next hop through the calculated standby outgoing interface to trigger PIM-SM or PIM-SSM to construct a standby SPT, where the standby SPT includes the standby path.
   Step 102 and step 103 may be executed in a random sequence.
104. When the active path fails, receive a multicast stream sent by the multicast source through the standby path and forward the multicast stream.

For example, the multicast stream sent by the multicast source is received through the standby path and then forwarded according to the forwarding entry and an outgoing interface.

It should be noted that when the active path works properly, the multicast stream sent by the multicast source is received through the active path and forwarded, and the multicast stream on the standby path is discarded. That is, when no failure occurs in the network, only the multicast stream from the active path is received, and the multicast stream from the standby path is discarded; only when a failure occurs in the network and the failure occurs on the active path, the active path is switched to the standby path, and the multicast stream is received through the standby path and forwarded. Fast failure detection technologies such as Bidirectional Forwarding Detection (BFD, Bidirectional Forwarding Detection) may be used to fast sense whether a failure occurs; if the active path fails, step 104 is executed.

In addition, it should be noted that if the network topology changes, after the unicast route converged, IP FRR will recalculate the active outgoing interface, the active next hop, the standby outgoing interface, and the standby next hop. As a result, the PIM routing result also changes dynamically and accordingly. In this case, the destination node sends a PIM Join message respectively according to the recalculated active and standby outgoing interfaces, and active and standby next hopsto set up a new active path and a new standby path, thereby adapting flexibly to different scenarios of network deployment.

As seen from the above description, in this embodiment, the active and standby outgoing interfaces and next hops (namely, an active outgoing interface, an active next hop, a standby outgoing interface, and a standby next hop, which are abbreviated to active and standby outgoing interfaces and next hops) for each unicast route reaching a multicast source are calculated, and then active and standby paths (namely, an active path and a standby path, which are abbreviated to active and standby paths) reaching the multicast source are constructed according to the calculated active and standby outgoing interfaces and next hops respectively. When the active path fails, the multicast stream sent by the multicast source is received through the standby path and forwarded; because the node in this solution may send PIM Join messages to construct active and standby paths dynamically according to the calculated active and standby outgoing interfaces and next hops (namely, according to the routing result), active and standby incoming interfaces and next hops of multicast for sending the PIM Join messages do not need to be configured on the device statically, which may adapt to dynamic topology changes of the network and greatly expand the multicast stream protection scenarios; in addition, compared with the unidirectional Join in the prior art, the Bidirectional PIM Join technology used in this embodiment may reduce transmission overhead between nodes.

### Embodiment 2

It can be known according to the method described in embodiment 1 that unicast FRR may calculate the active outgoing interface, the active next hop, the standby outgoing interface and the standby next hop for each unicast route, and interact with unicast to send bidirectional PIM Join messages to set up active and standby paths to the multicast source according to the calculated active and standby outgoing interfaces and next hops, so that two multicast streams are transmitted. When the network operates properly, the node in the multicast network receives only the multicast stream on the active path, and discards the multicast stream on the standby path; when the active path fails, the active path is switched to the standby path directly for receiving the multicast stream on the standby path and forwarding the multicast stream.

Definitely, if the network topology changes, after the unicast route converged, IP FRR will recalculate the active and standby outgoing interfaces and next hops, and then sends PIM Join messages according to the recalculated active and standby outgoing interfaces and next hops respectively to set up new active and standby paths.

For example, as shown in FIG. 2, node C is a destination node, node A is a source node, and nodes B and C are intermediate nodes, where node B is connected to node A, node C, and node D respectively, and node D is connected to node C and node B respectively. It is described as follows:
(1) Destination node C enables IP FRR to calculate that the active outgoing interface from destination node C to source node A is E0/0/0, the active next hop is node B, the standby outgoing interface is E0/0/1 and the standby next hop is node D.
(2) Destination node C sends a PIM Join message from E0/0/0 to node B and from E0/0/1 to node D respectively according to the multicast PIM protocol, and sets up an active path C-B-A and a standby path C-D-B-A to source node A hop by hop, so that the source node A can sends a multicast stream. It should be noted that after node B receives the multicast stream sent by the receiving A, the node B copies the multicast stream into two multicast streams, and then sends the streams through the active path and standby path respectively.
(3) When the network operates normally, node C directly discards the multicast stream received by E0/0/1. When the link between node B and node C fails, node C directly switches the active path C-B-A to the standby path C-D-B-A, and receives the multicast stream from E0/0/1. In this case, the standby path becomes active.

To describe the above method more clearly, this embodiment is further detailed by taking a solution in which the PIM-SM RPT sends a bidirectional PIM Join message for protection as an example.

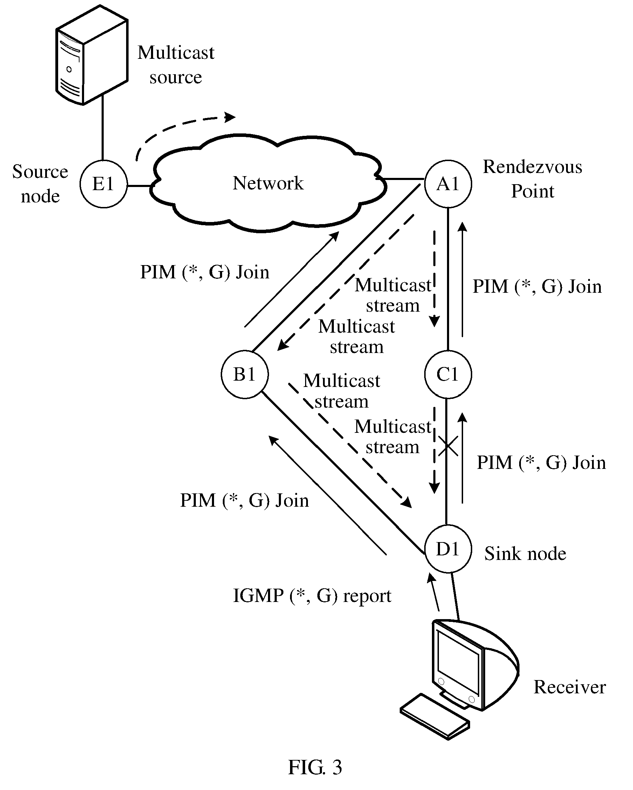

As shown in FIG. 3, it is assumed that: node E is a source node and is directly connected to the multicast source; node D1 is a destination node and is directly connected to the receiver; a Rendezvous Point (RP) is configured on node A1; node B1 and node C1 are intermediate nodes; specifically these nodes may be routers (RT, Rerouter) and all run PIM-SM; the interface of node D1 directly connected to the receiver runs the Internet Group Management Protocol (IGMP, Internet Group Management Protocol Internet). The process may be as follows:
201. Node D1 enables unicast IP FRR, calculates the active outgoing interface, the active next hop, the standby outgoing interface, and the standby next hop for each unicast route, and determines that the active route reaching the RP is D1-C1-A1 and that the standby route is D1-B1-A1; in this case, node D1 may also set up a fast failure detection mechanism to node C1, for example, use technologies such as BFD to set up the fast failure detection mechanism.
202. The receiver connected to node D1 such as a user sends an IGMP (*, G) report message to node D1, requesting data of multicast group G (namely, a multicast stream); after receiving the IGMP (*, G) report message, node D1 generates a PIM (*, G) entry, adds an outgoing interface, and searches for the upstream node of node D1 according to the RP, namely, the address of node A1. The PIM search result is that the upstream node on the active path (namely, the active next hop described in embodiments of the present invention) is node C1 and that the upstream node on the standby path (namely, the standby next hop described in embodiments of the present invention) is node B1.
203. Node D1 sends a PIM (*, G) Join message to node C1 and node B1 respectively, triggering PIM SM to construct an active RPT and a standby RPT.
204. After receiving the PIM (*, G) Join message, node C1 generates a (*, G) entry, adds an outgoing interface, and continues to send the PIM (*, G) Join message to the RP, namely, node A1, hop by hop.
   Likewise, after receiving the PIM (*, G) Join message, node B1 also generates a (*, G) entry, adds an outgoing interface, and continues to send the PIM (*, G) Join message to the RP, namely, node A1, hop by hop.
   Node A1 receives PIM (*, G) Join messages from both node C1 and node B1, generates a (*, G) entry, and adds two outgoing interfaces.
205. Node E1 unicasts a register message to the RP, creates a PIM (S, G) entry, adds the outgoing interface of (*, G) as an outgoing interface of (S, G), and forwards the multicast stream to the downstream nodes B1 and C1 of node E1 through the outgoing interface.
206. Both node C1 and node B1 receive the multicast stream, create a PIM (S, G) entry according to the received multicast stream, add the outgoing interface of the existing (*, G) as the outgoing interface of (S, G), and continue to forward the multicast stream to the downstream, for example, forward the multicast stream to node D in this embodiment.
207. Node D1 is directly connected to the receiver, receives the multicast stream from node C1 on the active path, creates a PIM (S, G) forwarding entry according to the received multicast stream, adds the outgoing interface of the existing (*, G) as the outgoing interface of (S, G), and forwards the multicast stream to the downstream receiver of node D1.
   Node D directly discards the multicast stream from node B on the standby path.
208. When the link between node D1 and node C1 fails, node D1 senses the failure quickly according to technologies such as BFD, directly switches to the standby path, receives the multicast stream from node B1 on the standby path, and forwards the received multicast stream to the downstream receiver of node D1.

It should be noted that, after the unicast route converged, unicast IP FRR of node D1 recalculates new routes, including the active outgoing interface, and the active next hop, the standby outgoing interface and the standby next hop for each route reaching the RP address, then uses PIM protocol to search for the upstream node on the active path reaching the RP and the upstream node on the standby path reaching the RP according to the calculated new routes, and retriggers the construction of an active RPT and a standby RPT.

In addition, it should be noted that in FIG. 3, the solid arrow indicates a PIM Join message and the dotted arrow indicates a multicast stream.

It can be known from the above description that, in this embodiment, PIM-SM runs on each node, active and standby outgoing interfaces and next hops for each unicast route reaching the multicast source are calculated by using unicast IP FRR, and then active and standby paths are constructed respectively according to the calculated active and standby outgoing interfaces and next hops by sending PIM Join messages; when the network operates properly, only the multicast stream on the active path is received and the multicast stream on the standby path is discarded; when the active path fails, the active path is switched to the standby path, and the multicast stream sent by the multicast source is received through the standby path and forwarded; because the node in this solution may dynamically configure the active and standby incoming interfaces of multicast for sending the PIM Join messages according to the calculated active and standby outgoing interfaces and next hops (namely, according to the routing result), and send the PIM Join messages to construct active and standby paths, active and standby incoming interfaces and next hops of multicast for sending the PIM Join messages do not need to be configured on the device statically, which may adapt to dynamic topology changes of the network and greatly expand the multicast stream protection scenarios; in addition, compared with the unidirectional Join in the prior art, the Bidirectional PIM Join technology used in this embodiment may reduce transmission overhead between nodes and ensure the multicast forwarding performance in case of a failure.

### Embodiment 3

This embodiment is further detailed by taking a solution in which the PIM-SSM SPT sends a bidirectional PIM Join message for protection as an example.

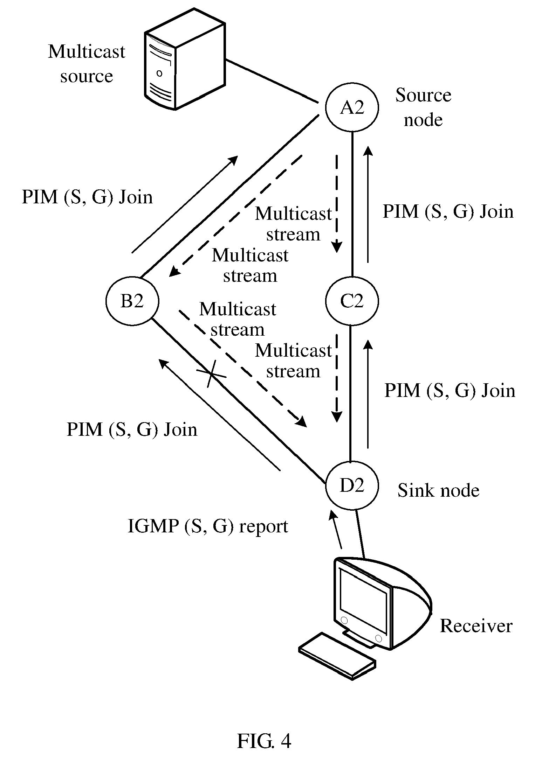

As shown in FIG. 4, it is assumed that: node A2 is a source node and is directly connected to the multicast source; node D2 is a destination node and is directly connected to the receiver; node B2 and node C2 are intermediate nodes; these nodes may be routers (RT, Rerouter) and all run PIM-SSM; and the interface of node D2 directly connected to the receiver runs IGMP. The process may be as follows:
301. Node D2 enables unicast IP FRR, calculates the active outgoing interface, the active next hop, the standby outgoing interface and the standby next hop for each unicast route, and determines that the active route reaching the source node A2 is D2-B2-A2 and that the standby route is D2-C2-A2; in this case, node D2 may also set up a fast failure detection mechanism to node B2, for example, use technologies such as BFD to set up the fast failure detection mechanism.
302. The receiver connected to node D2 such as a user sends an IGMP (S, G) report message, requesting data of a designated multicast source group (S, G); after receiving the IGMP (S, G) report message, node D2 generates a PIM (S, G) forwarding entry, adds an outgoing interface, and searches for the upstream node of node D according to the address of source node A. The PIM search result is that the upstream node on the active path (namely, the active next hop described in embodiments of the present invention) is node B2 and that the upstream node on the standby path (namely, the standby next hop described in embodiments of the present invention) is node C2.
303. Node D2 sends a PIM (S, G) Join message to both node C2 and node B2, triggering PIM SSM to construct an active SPT and a standby SPT.
304. After receiving the PIM (S, G) Join message, node C2 generates an (S, G) entry, adds an outgoing interface, and continues to send the PIM (S, G) Join message to the upstream node hop by hop.
   Likewise, after receiving the PIM (S, G) Join message, node B2 also generates an (S, G) entry, adds an outgoing interface, and continues to send the PIM (S, G) Join message to the upstream node hop by hop.
   Node A2 receives PIM (S, G) Join messages from both node C2 and node B2, generates an (S, G) entry and adds two outgoing interfaces.
305. Node A2 is directly connected to the multicast source, and forwards the multicast stream to the downstream nodes B2 and C2 of node A2 according to the created PIM (S, G) entry.
306. Node C2 and node B2 both receive the multicast stream, and continue to forward the multicast stream to the downstream according to the outgoing interface of the existing (S, G) entry.
307. Node D2 is directly connected to the receiver, receives the multicast stream from node B2 on the active path, and forwards the multicast stream to the downstream receiver of node D2.
   Node D2 directly discards the multicast stream from node C on the standby path.
308. When the link between node D2 and node B2 fails, node D2 senses the failure quickly according to technologies such as BFD, directly switches to the standby path, receives the multicast stream from node C2 on the standby path, and forwards the received multicast stream to the downstream receiver of node D2.

It should be noted that, after the unicast route converged, unicast IP FRR of node D2 recalculates new routes, including the active outgoing interface, the active next hop, the standby outgoing interface and the standby next hop for each route reaching the multicast source address, then uses PIM protocol to search for the upstream node on the active path reaching the multicast source and the upstream node on the standby path reaching the multicast source according to the calculated new routes, and retriggers the construction of an active SPT and a standby SPT.

In addition, it should be noted that in FIG. 4, the solid arrow indicates a PIM Join message and the dotted arrow indicates a multicast stream.

It can be known from the above description that, in this embodiment, PIM-SSM runs on each node, active and standby outgoing interfaces and next hops for each unicast route reaching the multicast source are calculated by using unicast IP FRR, and then active and standby paths reaching the multicast source are constructed respectively according to the calculated active and standby outgoing interfaces and next hops by sending PIM Join messages; when the network operates properly, only the multicast stream on the active path is received and the multicast stream on the standby path is discarded; when the active path fails, the active path is switched to the standby path, and the multicast stream sent by the multicast source is received through the standby path and forwarded; because the node in this solution may dynamically send PIM Join messages to construct active and standby paths according to the calculated active and standby outgoing interfaces and next hops (namely, according to the routing result), active and standby incoming interfaces of multicast for sending the PIM Join messages do not need to be configured on the device statically, which may adapt to dynamic topology changes of the network and greatly expand the multicast stream protection scenarios; in addition, compared with the unidirectional Join in the prior art, the Bidirectional PIM Join technology used in this embodiment may reduce transmission overheads between nodes and ensure the multicast forwarding performance in case of a failure.

### Embodiment 4

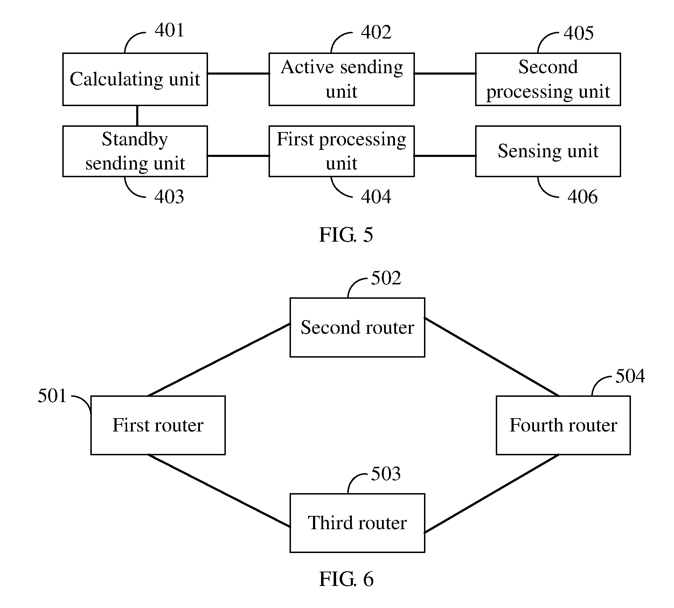

To better implement the above method, this embodiment provides a router accordingly. As shown in FIG. 5, the router includes a calculating unit 401, an active sending unit 402, a standby sending unit 403, and a first processing unit 404.

The calculating unit 401, configured to calculate an active outgoing interface, a standby outgoing interface, an active next hop, and a standby next hop for each unicast route reaching the multicast source; for example, the calculating unit 401 may calculate the active outgoing interface, the standby outgoing interface, the active next hop and the standby next hop for each unicast route reaching the multicast source by enabling unicast IP FRR.

The active sending unit 402, configured to send a PIM Join message to the active next hop to set up an active path by using the active outgoing interface calculated by the calculating unit 401 as an active incoming interface of multicast; for example, the active sending unit 402 sends a PIM Join message to the active next hop through the calculated active outgoing interface to trigger PIM-SM to construct an active RPT, where the active RPT includes the active path; or the active sending unit 402 sends a PIM Join message to the active next hop through the calculated active outgoing interface to trigger PIM-SM or PIM-SSM to construct an active SPT, where the active SPT includes the active path.

The standby sending unit 403, configured to send a PIM Join message to the standby next hop to set up a standby path by using the standby outgoing interface calculated by the calculating unit 401 as an active incoming interface of multicast; for example, the standby sending unit 403 sends a PIM Join message to the standby next hop through the calculated standby outgoing interface to trigger PIM-SM to construct a standby RPT, where the standby RPT includes the standby path; or the standby sending unit 403 sends a PIM Join message to the standby next hop through the calculated standby outgoing interface to trigger PIM-SM or PIM-SSM to construct a standby SPT, where the standby SPT includes the standby path.

The first processing unit 404, configured to receive the multicast stream sent by the multicast source through the standby path, which the standby sending unit 403 initiates to set up, and forward the multicast stream when the active path which the active sending unit 402 initiates to set up fails.

The first processing unit 404 may include a receiving sub-unit and a forwarding sub-unit.

The receiving sub-unit, configured to receive the multicast stream sent by the multicast source through the standby path which the standby sending unit initiates to set up.

The forwarding sub-unit, configured to forward the multicast stream received by the receiving sub-unit.

As shown in FIG. 5, the router may further include a second processing unit 405.

The second processing unit 405 is configured to: when the active path which the active sending unit 402 initiates to set up is working properly, receive the multicast stream sent by the multicast source through the active path, forward the multicast stream, and discard the multicast stream on the standby path.

As shown in FIG. 5, the router may further include a sensing unit 406.

The sensing unit 406 is configured to sense whether the active path fails through fast failure detection.

The first processing unit 404 is configured to receive the multicast stream sent by the multicast source through the standby path, which the standby sending unit 403 initiates to set up, and forward the multicast stream when the sensing unit 406 senses that the active path fails.

It should be noted that if the network topology changes, after the unicast route converged, the calculating unit 401 recalculates the active outgoing interface, the active next hop, the standby outgoing interface and the standby next hop. As a result, the PIM routing result also changes dynamically and accordingly. In this case, the active sending unit 402 and the standby sending unit 403 send a PIM Join message respectively according to the recalculated active outgoing interface, active next hop, standby outgoing interface and standby next hop to set up a new active path and a new standby path, thereby adapting flexibly to different scenarios of network deployment.

The specific implementation of the aforementioned units may make reference to the above embodiments, and is not further described.

It can be known from the above description that, the calculating unit 401 of the router in this embodiment may calculate the active and standby outgoing interfaces and next hops for the unicast route reaching the multicast source, and then the active sending unit 402 and the standby sending unit 403 construct an active path and a standby path respectively according to the calculated active and standby outgoing interfaces and next hops; when the sensing unit 406 senses that the active path fails, the first processing unit 404 receives the multicast stream sent by the multicast source through the standby path and forwards the multicast stream; because the node in the solution may dynamically send PIM Join messages to construct active and standby paths according to the calculated active and standby outgoing interfaces and next hops (namely, according to the routing result), active and standby incoming interfaces and next hops of multicast for sending the PIM Join messages do not need to be configured on the device statically, which may adapt to dynamic topology changes of the network and greatly expand the multicast stream protection scenarios; in addition, compared with the unidirectional Join in the prior art, the Bidirectional PIM Join technology used in this embodiment may reduce transmission overhead between nodes.

### Embodiment 5

This embodiment provides a communication system accordingly, which includes any router provided by embodiments of the present invention.

The router may include a calculating unit 401, an active sending unit 402, a standby sending unit 403, a first processing unit 404, and may further include a second processing unit 405 and a sensing unit 406, where the first processing unit 404 may include a receiving sub-unit and a forwarding sub-unit, which are detailed in embodiment 4 and are not further described.

Unicast FRR of the router in the communication system may calculate the active outgoing interface, the active next hop, the standby outgoing interface and the standby next hop for each unicast route, and interact with unicast to send bidirectional PIM Join messages to set up active and standby paths to the multicast source according to the calculated active outgoing interface, active next hop, standby outgoing interface and standby next hop, so that two multicast streams are transmitted. When the network operates properly, the router in the communication system receives only multicast stream on the active path, and discards the multicast stream on the standby path; when the active path fails, the active path is switched to the standby path for receiving the multicast stream on the standby path and forwarding the multicast stream. For details, see the embodiments above.

If the network topology changes, after the unicast route converged, IP FRR of the router recalculates the active and standby outgoing interfaces and next hops, and then sends PIM Join messages according to the recalculated active and standby outgoing interfaces and next hops respectively to set up new active and standby paths.

An example is given below to briefly describe the communication system. As shown in FIG. 6, the communication system may include a first router 501, a second router 502, a third router 503, and a fourth router 504, assuming that the first router 501 serves as a destination node.

The first router 501 is configured to: calculate an active outgoing interface, a standby outgoing interface, an active next hop, and a standby next hop for each unicast route reaching a multicast source; send a PIM Join message to the active next hop to set up an active path by using the calculated active outgoing interface as an active incoming interface of multicast; send a PIM Join message to the standby next hop to set up a standby path by using the calculated standby outgoing interface as a standby incoming interface of multicast; and when the active path fails, receive a multicast stream sent by the multicast source through the standby path and forward the multicast stream.

The second router 502, which serves as the active next hop, is configured to receive the PIM Join message sent by the first router 501, send a PIM Join message to the fourth router 504 to set up an active path, and after receiving a multicast stream sent by the fourth router 504, forward the multicast stream to the first router 501.

The third router 503 serves as the standby next hop, and is configured to: receive the PIM Join message sent by the first router 501, send a PIM Join message to the fourth router 504 to set up a standby path, and after receiving a multicast stream sent by the fourth router 504, forward multicast stream to the first router 501.

The fourth router 504 is configured to receive the PIM Join message sent by the second router 502 and the PIM Join message sent by the third router 503, and after the active path and the standby path are set up, send a multicast stream to the second router 502 through the active path, and send a multicast stream to the third router 503 through the standby path.

The specific implementation may make reference to the embodiments above and is not repeated herein.

It can be known from the above description that, the communication system in this embodiment calculates the active and standby outgoing interfaces and next hops for each unicast route reaching the multicast source by using unicast IP FRR, and then constructs active and standby paths respectively according to the calculated active and standby outgoing interfaces and next hops by sending PIM Join messages; when the network operates properly, the communication system receives only the multicast stream on the active path and discards the multicast stream on the standby path; when the active path fails, the active path is switched to the standby path, and the communication system receives the multicast stream sent by the multicast source through the standby path and forwards the multicast stream; because the node in this solution may dynamically send PIM Join messages to construct active and standby paths according to the calculated active and standby outgoing interfaces and next hops (namely, according to the routing result), active and standby incoming interfaces and next hops of multicast for sending the PIM Join messages do not need to be configured on the device statically, which may adapt to dynamic topology changes of the network and greatly expand the multicast stream protection scenarios; in addition, compared with the unidirectional Join in the prior art, the Bidirectional PIM Join technology used in this embodiment may reduce transmission overhead between nodes and ensure the multicast forwarding performance in case of a failure occurs.

Persons having ordinary skill in the art may understand that all or part of the steps of the method according to the embodiments of the present invention may be implemented by a program instructing relevant hardware. The program may be stored in a computer readable storage medium, which may be a Read Only Memory (ROM, Read Only Memory), a Random Access Memory (RAM, Random Access Memory), a magnetic disk, or an optical disk.

Detailed above are a fast convergence method, router, and communication system for multicast provided by the embodiments of the present invention. Although the principle and implementation of the present invention are described with reference to exemplary embodiments, the embodiments are only intended to help understand the method and core idea of the present invention. In addition, with respect to the implementation and applicability of the present invention, modifications and variations may be made by persons of ordinary skill in the art according to the idea of the present invention. Therefore, the specification shall not be construed as a limitation on the present invention.

## Claims

1. A fast convergence method for multicast, comprising:
calculating an active outgoing interface, a standby outgoing interface, an active next hop, and a standby next hop for each unicast route reaching a multicast source;
sending a Protocol Independent Multicast (PIM) Join message to the active next hop to set up an active path by using the calculated active outgoing interface as an active incoming interface of multicast;
sending a PIM Join message to the standby next hop to set up a standby path by using the calculated standby outgoing interface as a standby incoming interface of multicast; and
when the active path fails, receiving a multicast stream sent by the multicast source through the standby path and forwarding the multicast stream.

2. The method according to claim 1, wherein the calculating the active outgoing interface, the standby outgoing interface, the active next hop, and the standby next hop for each unicast route reaching the multicast source comprises:
calculating the active outgoing interface, the standby outgoing interface, the active next hop, and the standby next hop for each unicast route reaching the multicast source by enabling unicast Internet Protocol Fast Reroute (FRR).

3. The method according to claim 1 or 2, wherein:
the sending the PIM Join message to the active next hop to set up the active path by using the calculated active outgoing interface as the active incoming interface of multicast comprises:
sending the PIM Join message to the active next hop through the calculated active outgoing interface to trigger a Protocol Independent Multicast-Sparse Mode (PIM-SM) to construct an active Rendezvous Point Tree (RPT), wherein the active RPT comprises the active path; and
the sending the PIM Join message to the standby next hop to set up the standby path by using the calculated standby outgoing interface as the standby incoming interface of multicast comprises:
sending the PIM Join message to the standby next hop through the calculated standby outgoing interface to trigger the PIM-SM to construct a standby RPT, wherein the standby RPT comprises the standby path.

4. The method according to claim 1 or 2, wherein:
the sending the PIM Join message to the active next hop to set up the active path according to the calculated active outgoing interface comprises:
sending the PIM Join message to the active next hop through the calculated active outgoing interface to trigger a Protocol Independent Multicast-Sparse Mode (PIM-SM) or Protocol Independent Multicast-Source-Specific Multicast (PIM-SSM) to construct an active Shortest Path Tree (SPT), wherein the active SPT comprises the active path; and
the sending the PIM Join message to the standby next hop to set up the standby path by using the calculated standby outgoing interface as the standby incoming interface of multicast comprises:
sending the PIM Join message to the standby next hop through the calculated standby outgoing interface to trigger the PIM-SM or PIM-SSM to construct a standby SPT, wherein the standby SPT comprises the standby path.

5. The method according to claim 1 or 2, further comprising:
when the active path works properly, receiving a multicast stream sent by the multicast source through the active path, forwarding the multicast stream, and discarding the multicast stream on the standby path.

6. The method according to claim 1 or 2, wherein:
fast failure detection such as Bidirectional Forwarding Detection (BFD) is used to sense whether the active path fails.

7. A router, comprising:
a calculating unit, configured to calculate an active outgoing interface, a standby outgoing interface, an active next hop, and a standby next hop for each unicast route reaching a multicast source;
an active sending unit, configured to send a Protocol Independent Multicast (PIM) Join message to the active next hop to set up an active path by using the active outgoing interface calculated by the calculating unit as an active incoming interface of multicast;
a standby sending unit, configured to send a PIM Join message to the standby next hop to set up a standby path by using the standby outgoing interface calculated by the calculating unit as a standby incoming interface of multicast; and
a first processing unit, configured to receive a multicast stream sent by the multicast source through the standby path, which the standby sending unit initiates to set up, and forward the multicast stream when the active path which the active sending unit initiates to set up fails.

8. The router according to claim 7, further comprising a second processing unit, wherein:
the second processing unit is configured to receive a multicast stream sent by the multicast source through the active path, forward the multicast stream, and discard the multicast stream on the standby path when the active path which the active sending unit initiates to set up works properly.

9. The router according to claim 7 or 8, further comprising a sensing unit, wherein:
the sensing unit is configured to sense the failure of the active path by use of Bidirectional Forwarding Detection (BFD); and
the first processing unit is further configured to receive the multicast stream sent by the multicast source through the standby path, which the standby sending unit initiates to set up, and forward the multicast stream when the sensing unit senses failure of the active path.

10. A communication system, comprising:
a first router, configured to calculate an active outgoing interface, a standby outgoing interface, an active next hop and a standby next hop for each unicast route reaching a multicast source; send a Protocol Independent Multicast (PIM) Join message to the active next hop to set up an active path by using the calculated active outgoing interface as an active incoming interface of multicast; send a PIM Join message to the standby next hop to set up a standby path by using the calculated standby outgoing interface as a standby incoming interface of multicast; and when the active path fails, receive a multicast stream sent by the multicast source through the standby path and forward the multicast stream;
a second router, which serves as the active next hop, configured to receive the PIM Join message sent by the first router, send a PIM Join message to a fourth router to set up an active path, and after receiving a multicast stream sent by the fourth router, forward the multicast stream to the first router;
a third router, which serves as the standby next hop, configured to receive the PIM Join message sent by the first router, send a PIM Join message to the fourth router to set up a standby path, and after receiving a multicast stream sent by the fourth router, forward the multicast stream to the first router; and
the fourth router, configured to receive the PIM Join message sent by the second router and the PIM Join message sent by the third router, and after the active path and the standby path are set up, send a multicast stream to the second router through the active path, and send a multicast stream to the third router through the standby path.
